# EUROPEAN PATENT SPECIFICATION

(11) **EP 3 467 631 B1**
(45) Date of publication and mention of the grant of the patent: **03.07.2024**
(21) Application number: 16902979.0
(22) Date of filing: 25.11.2016
(51) Int. Cl.: G06F 3/0484, G06F 3/041, G06F 3/0488, G06F 3/04845

(54) **OPERATION METHOD AND DEVICE FOR TERMINAL**
BETRIEBSVERFAHREN UND -VORRICHTUNG FÜR ENDGERÄT
PROCÉDÉ ET DISPOSITIF D'OPÉRATION POUR TERMINAL

(30) Priority: 25.05.2016 CN 201610356648
(43) Date of publication of application: 10.04.2019
(73) Proprietor: ZTE Corporation, Shenzhen, Guangdong 518057 (CN)
(72) Inventor: CUI, Linwei, Shenzhen Guangdong 518057 (CN)
(74) Representative: Deambrogi, Edgardo
(86) International application number: PCT/CN2016/107326
(87) International publication number: WO 2017/201995

(56) References cited:
- CN-A- 103 294 394
- CN-A- 103 649 892
- CN-A- 105 242 826
- CN-A- 106 055 231
- US-A1- 2006 022 955
- US-A1- 2009 046 110

## Description

### Technical Field

The present disclosure relates to the field of communication, and in particular to a method of magnifying and viewing a lock screen wallpaper of terminal having a touch screen, a terminal and computer-readable storage medium.

### Background

For the existing magnifying (zoom-in) function of terminals in a lock screen state, the following technology is adopted: after the terminal enables a switch for system magnifier, the magnifier function is opened or closed by a user double-clicking the terminal; then a local area of the entire lock screen is magnified by the user's two fingers. This local area is a picture, text, or other information that may be observed by the user, while picture contents that are blocked by the text or information cannot be magnified and observed.

In addition, lock screen wallpapers of existing mobile terminals are becoming more and more rich and colorful, and more and more high-quality, high-definition and high-resolution photographs are set as lock screen wallpapers. However, since the existing magnifying function cannot magnify a displayed content of a terminal in the lock screen state, local details of the wallpaper are not easy to be observed, and thus the high-definition and high-resolution photographs are not fully used.

There is no effective solution to the above problems in the existing art yet.

US2006022955 A1 discloses a computer implemented method for a touchscreen display, comprising: presenting graphical information on the touchscreen display; detecting a touch over the touchscreen display; expanding an area of the touch screen display proximate the location of the touch if the input duration and/or a pressure value, exceeds a threshold duration and/or a pressure value.

US2009046110 A1 discloses a method of manipulating an image displayed on a display of an electronic device involving zooming the image in response to stroke that is performed utilizing amount of touch pressure that meets pressure criterion while electronic device is in zoom mode.

### Summary

The present invention is defined in the appended independent claims to which reference should be made. Advantageous features are set out in the appended dependent claims.

### Brief Description of Drawings

The drawings described herein are intended to provide a further understanding of the present disclosure, and are intended to be a part of the present disclosure. The exemplary embodiments of the present disclosure and the description thereof are for explaining the present disclosure and do not constitute an undue limitation of the present disclosure. In the drawings:
Fig. 1 is a block diagram showing a hardware structure of a mobile terminal in an operation method for the terminal according to an example useful to understand the background of the invention;
Fig. 2 is a flowchart showing the operation method for a terminal according to an example useful to understand the background of the invention;
Fig. 3 is a structural block diagram showing an operation device for a terminal according to an example useful to understand the background of the invention;
Fig. 4 is a flowchart I showing a method of magnifying and viewing a lock screen wallpaper in an operation of a terminal according to an embodiment of the disclosure; and
Fig. 5 is a flowchart II showing a method of magnifying and viewing a lock screen wallpaper in an operation of a terminal according to an embodiment of the disclosure.

### Detailed Description

The disclosure will be described in detail below with reference to the drawings in conjunction with the embodiments. It should be noted that the embodiments of the disclosure and features therein may be combined with each other in any manner as long as they are not contradictory.

It should be also noted that terms "first", "second", and the like in the description, claims and drawings of the disclosure are used for the purpose of distinguishing similar objects instead of indicating a specific order or sequence.

Embodiment 1 according to a non claimed example, useful to understand the background of the invention;

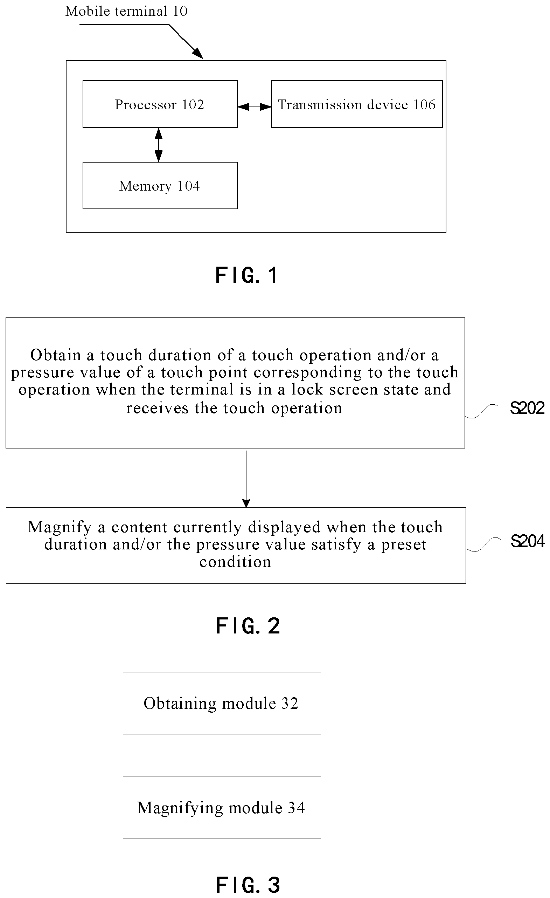

The method embodiment provided in Embodiment 1 of the present disclosure may be implemented in a mobile terminal, a computer terminal or the like. Taking running on a mobile terminal as an example, Fig. 1 is a block diagram showing a hardware structure of a mobile terminal in an operation method for the terminal according to an embodiment of the disclosure. As shown in Fig. 1, a mobile terminal 10 may include one or more (only one shown in the figure) processor 102 (the processor 102 may include, but is not limited to, a microprocessor (MCU) or a programmable logic device such as FPGA), a memory 104 for storing data, and a transmission device 106 for a communication function. It will be understood by those ordinary skilled in the art that the structure shown in Fig. 1 is merely illustrative, and does not form any limitation to the structure of the above electronic device. For example, the mobile terminal 10 may also include more or fewer components than those shown in Fig. 1, or have a different configuration than that shown in Fig. 1.

The memory 104 may be configured to store software programs of application software and modules such as program instructions/modules corresponding to the operation method for a terminal in the embodiment of the present disclosure. The processor 102 executes the software programs and modules stored in the memory 104 to perform various functional applications and data processing, that is, to implement the above method. The memory 104 may include a high speed random access memory and may also include a non-volatile memory such as one or more magnetic storage device, flash memory, or other non-volatile solid state memory. In some examples, the memory 104 may further include memories remotely located relative to the processor 102, and these remote memories may be connected to the mobile terminal 10 via a network. Examples of such networks include, but are not limited to, the Internet, intranets, local area networks, mobile communication networks, and combinations thereof.

The transmission device 106 is configured to receive or transmit data via a network. Specific examples of such networks may include a wireless network provided by a communication provider of the mobile terminal 10. In an example, the transmission device 106 includes a Network Interface Controller (NIC) that may be connected to another network device through a base station to communicate with the Internet. In an example, the transmission device 106 may be a Radio Frequency (RF) module configured to communicate with the Internet wirelessly.

In the present embodiment, an operation method for the above terminal is provided. Fig. 2 is a flowchart showing the operation method for a terminal according to an embodiment of the disclosure. As shown in Fig. 2, the flow includes the steps of:
step S202: obtaining a touch duration of a touch operation and/or a pressure value of a touch point corresponding to the touch operation when the terminal is in a lock screen state and receives the touch operation; and
step S204: magnifying a content currently displayed when the touch duration and/or the pressure value satisfy a preset condition.

Through the above steps S202 to S204 of the embodiment, when it is determined that the terminal is in a lock screen state, the displayed content of the terminal in the lock screen state can be magnified via a touch point satisfying the preset condition, thereby the problem that a displayed content of the terminal in a lock screen state cannot be magnified in the existing art can be solved, and the user experience is improved.

It should be noted that the preset conditions involved in the present embodiment are that the touch duration is greater than a first preset threshold, the pressure value is greater than a second preset threshold. In a specific application scene of the present embodiment, the first preset value may take a value of 1s, and the second preset threshold may take a value of 0.8N. Obviously, the above are only illustrative, and may be modified and set according to actual needs.

Based on the above preset conditions, for the manner of magnifying a content currently displayed when the touch duration and/or the pressure value satisfy a preset condition involved in step S204 of the embodiment, it could be implemented by: magnifying a displayed content corresponding to a contact area of the touch point in the content currently displayed on a display screen when the touch duration is greater than the first preset threshold and/or the pressure value is greater than the second preset threshold.

That is, in the present embodiment, the magnifying may be performed when either the touch duration or the pressure value satisfies the condition, and may also be performed after both the touch duration and the pressure value satisfy the condition. The content magnified (magnified content) is a displayed content corresponding to the contact area of the contact point in the content currently displayed on the display screen. For example, currently a user's finger touches a lower right corner of the display screen. When the touch duration of the user's finger is greater than 1s and/or the pressure value is greater than 0.8N, a content in the contact portion between the user's finger and the display screen is magnified.

For the manner of magnifying the displayed content corresponding to the contact area of the touch point in the content currently displayed involved in the present embodiment, in an alternative implementation of the present embodiment, the manner may include:
step S204-1: obtaining a contact area of the touch point in the content currently displayed;
step S204-2: determining from the contact area an area of a largest circle carried by the contact area; and
step S204-3: magnifying a content displayed in the area of the largest circle.

As can be seen from the above steps S204-1 to S204-3, after a contact area of the touch point with the display screen is obtained, an area of a largest circle carried by the contact area is determined, and then a displayed content corresponding to the area of the largest circle is magnified. The specific content displayed in the embodiment is the content shown in the above displayed content.

It should be noted that, during movement of the touch point, as long as the touch duration and/or the pressure value satisfy the above preset condition, the magnifying may be performed. That is, where the touch point moves, where a displayed content in the corresponding contact portion is magnified. The specific content to be displayed may be determined by the manners in the steps S204-1 to S204-3 described above.

In an alternative implementation of the present embodiment, the touch operation in the embodiment may correspond to a plurality of touch points. When there is a plurality of touch points, before magnifying the displayed content in the contact area of the touch point corresponding to the touch operation in the content currently displayed, the method of the embodiment further includes:
step S206: determining time points at which the touch durations and/or the pressure values of the plurality of touch points satisfy the preset condition ;
wherein the time points are used for indicating a sequence of the time when the respective touch durations and/or the pressure values of the plurality of touch points satisfy the preset condition.

Based on the step S206, the manner of magnifying the displayed content corresponding to the contact area of the touch point in the content currently displayed on the display screen involved in the embodiment may be: in a case where it is determined according to the time points that there is a single touch point whose touch duration and/or pressure value first satisfy the preset condition among the plurality of touch points, magnifying a displayed content corresponding to the contact area of the touch point that first satisfies the preset condition in the content currently displayed on the display screen.

In addition, there are plural touch points whose touch durations and/or pressure values simultaneously satisfy the preset condition among the plurality of touch points, magnifying operation is prohibited.

That is, if one of the plurality of touch points first satisfies the preset condition, a portion of the displayed content corresponding to the touch point that first satisfies the preset condition could be magnified. In contrast, the magnifying operation is prohibited when a plurality of touch points first satisfy the preset condition at the same time.

It should be noted that in the embodiment, the magnified content currently displayed on the display screen is a lock screen wallpaper in the content currently displayed on the terminal in the lock screen state.

Through the description of the above embodiment, it should be clearly understood by those skilled in the art that the method according to the above embodiment may be implemented by means of software and essential universal hardware platform. Obviously, it may also be implemented by hardware, but in most cases, the former is preferable. Based on such understanding, the technical solutions of the present invention essentially or, in other words, a part thereof contributing to the prior art, can be embodied in a form of a software product, wherein the software product is stored in a storage medium (such as an ROM/RAM, a disk, or an optical disc) and includes a number of instructions to make a terminal device (which may be a mobile phone, a computer, a server, or a network device, etc.) to execute the methods of the various embodiments of the present disclosure.

Embodiment 2 according to a non claimed example, useful to understand the background of the invention;

The present embodiment further provides an operation device for a terminal to implement the above embodiment and preferable implementations. Details which have been explained will not be repeated here. As used herein, the term "module" may be a combination of software and/or hardware that can realize a preset function. Although the devices described in the following embodiment is preferably implemented in software, hardware, or a combination of software and hardware, is also possible and contemplated.

Fig. 3 is a structural block diagram of an operation device for a terminal according to an embodiment of the disclosure. As shown in Fig. 3, the device includes: an obtaining module 32, which is configured to obtain a touch duration of a touch operation and/or a pressure value of a touch point corresponding to the touch operation when the terminal is in a lock screen state and receives a touch operation; a magnifying module 34, which is coupled to the obtaining module 32 and is configured to magnify a content currently displayed when the touch duration and/or the pressure value satisfy a preset condition.

Optionally, the magnifying module 36 includes: a magnifying unit, which is configured to magnify a displayed content corresponding to the contact area of the touch point (touch operation) in the content currently displayed on a display screen when the touch duration is greater than the first preset threshold and/or the pressure value is greater than the second preset threshold.

The magnifying unit may include: an obtaining subunit, which is configured to obtain a contact area of the touch point in the content currently displayed; a determining subunit, which is configured to determine from the contact area an area of a largest circle carried by the contact area; and a first magnifying subunit, which is configured to magnify the content displayed in the area of the largest circle.

Optionally, when the touch operation corresponds to a plurality of touch points, the device of the embodiment includes: a determining module, which is configured to determine time points at which the touch durations and/or the pressure values of the plurality of touch points satisfy the preset condition before the displayed content corresponding to the touch point in the content currently displayed is magnified.

Further, the magnifying unit includes: a second magnifying subunit, which is configured to magnify, in a case where it is determined according to the time points that there is a single touch point whose touch duration and/or pressure value first satisfy the preset condition among the plurality of touch points, a displayed content corresponding to the contact area of the touch point that first satisfies the preset condition in the content currently displayed on the display screen.

Based on the situation that there is a plurality of touch points, the device of the embodiment may further include: a prohibiting module, which is configured to prohibit a magnifying operation in a case where there are plural touch points whose touch durations and/or pressure values simultaneously satisfy the preset condition among the plurality of touch points.

It should be noted that in the embodiment, the magnified content currently displayed on the display screen is a lock screen wallpaper in the content currently displayed on the terminal in the lock screen state.

It should be noted that each of the above modules/units may be implemented by software or hardware. For the latter, it may be implemented in, but are not limited to the following manner: all of the above modules/units are located in the same processor; or, the above modules/units are located in different processors in any combination.

The above Embodiment 1 and Embodiment 2 will be described in detail below with reference to the specific Embodiment 3 of the present disclosure.

### Embodiment 3

The present embodiment provides a method of magnifying and viewing a lock screen in an operation method for a terminal. In this manner, a magnifier may be quickly activated in the lock screen state, thereby magnifying a content of the lock screen wallpaper at an area pressed by a finger so as to facilitate detailed observation by a user.

Implementations of the present embodiment include: when the terminal is in a lock screen state, activating the magnifier function by a long press (long-time press) or heavy press on the touch screen, and then magnifying the lock screen wallpaper at a position pressed by the finger (pressed position) after the long or heavy press satisfies a preset condition.

Herein, the lock screen state of the terminal refers to a state in which the terminal is in a bright screen state while the terminal system is in a lock screen state. It should be noted that the mobile terminal may be provided with a lock screen wallpaper, and the lock screen may be provided with an unique wallpaper.

For the present embodiment, after the condition for activating the magnifier is reached, the lock screen wallpaper at the position pointed by the finger is always magnified as the finger slides. Moreover, according to the invention, only the lock screen wallpaper of the lock screen is magnified, other elements other than the lock screen wallpaper, such as texts and icons on the lock screen are not magnified.

For the heavy press in the embodiment, it means touching and pressing a mobile terminal device capable of sensing a pressure sensing value and reporting the pressure sensing value, and the magnifying condition is satisfied when the pressure sensing value exceeds a preset pressure value. Similarly, for the long press, the magnifying condition is satisfied when a duration of the contact between the finger and the display screen exceeds a preset duration.

In an application scene of the present embodiment, when the touch screen is contacted by a single finger, only a circular area of a fixed size is magnified when the condition for activating the magnifier is reached. However, in another application scene of the embodiment, when the touch screen is contacted by two fingers, only a position pressed by the finger that first reaches the condition for activating the magnifier is magnified. If two fingers reach the condition simultaneously, neither of the positions pressed by the two fingers would be magnified.

The present embodiment will be described in detail below with reference to the accompanying drawings.

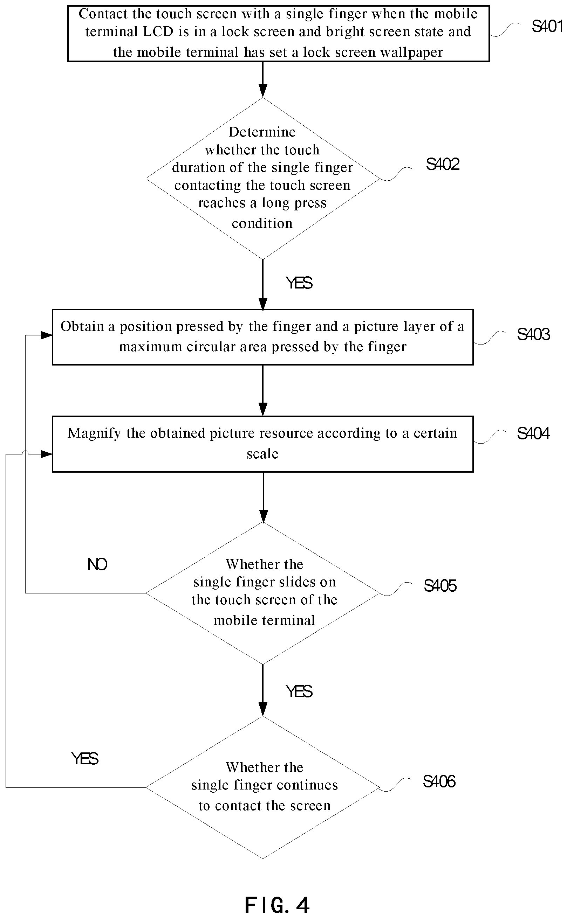

Fig. 4 is a flowchart I showing a method of magnifying and viewing a lock screen wallpaper in an operation of a terminal according to an embodiment of the disclosure. As shown in Fig. 4, taking activating the magnifier by a long press with a single finger on the touch screen to magnify the lock screen wallpaper as an example for detailed description, the method includes the steps of S401 to S406:
At step S401, contacting the touch screen with a single finger when the mobile terminal LCD is in a lock screen and bright screen state and the mobile terminal has set a lock screen wallpaper.
At step S402, determining whether the touch duration of the single finger contacting the touch screen reaches a long press condition, if the long press condition is reached, proceeding to step S403;
   wherein the long press condition may be that the lock screen is pressed more than 1s.
At step S403, obtaining a position pressed by the finger and a picture layer of a maximum circular area pressed by the finger;
   wherein the obtaining may be only obtaining locally (obtaining a localized portion), or may be first obtaining the entire picture layer and then obtaining locally According to the invention, other elements on the lock screen, such as texts, icons, widgets, or pop-ups, are obtained.
At step S404, magnifying the obtained picture resource according to a certain scale;
   wherein the maximum scale may be set such that a diameter of the displayed circular area does not exceed a screen width of the mobile terminal device. A lower edge of the displayed circle of the magnified layer coincides with a circular center of the circle at the pressed position.
At step S405, determining whether the single finger slides on the touch screen of the mobile terminal; if the finger slides and the finger contact position changes, which requires re-obtaining the magnified position, proceeding to step S403, and if the finger does not slide continuously, proceeding to step S406.
At step S406, determining whether the single finger continues to contact the screen, if the contact continues, continuously magnifying the position pressed by the finger and jumping to S404, and if the finger no longer contacts the screen, stopping magnifying, and restoring the lock screen of the mobile terminal to display in a state before the magnifying.

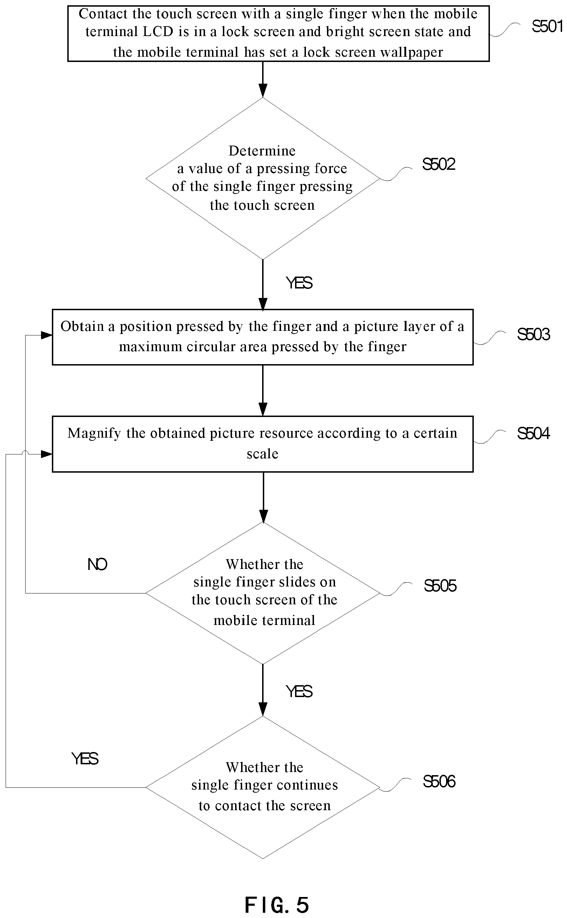

Fig. 5 is a flowchart II showing a method of magnifying and viewing a lock screen wallpaper in an operation of a terminal according to an embodiment of the disclosure. As shown in Fig. 5, take activating the magnifier by a heavy press with a single finger on the touch screen to magnify the lock screen wallpaper as an example for detailed description, the method includes the steps of S501 to S506:
At step S501, contacting the touch screen with a single finger when the mobile terminal LCD is in a bright screen and lock screen state and the mobile terminal has set a lock screen wallpaper;
   wherein the mobile terminal is a 3d touch device.
At step S502, determining a value of a pressing force of the single finger pressing the touch screen, wherein if a feedback value of the press reaches the condition of heavy pressure, proceeding to step S503, and if a light pressure remains, the magnifying and viewing method is not started.
At step S503, obtaining a position pressed by the finger and a picture layer of a maximum circular area pressed by the finger;
   wherein the obtaining may be only obtaining locally (obtaining a localized portion), or may be first obtaining the entire picture layer and then obtaining locally According to the invention, other elements on the lock screen, such as texts, icons, widgets, or pop-ups, are not obtained.
At step S504, magnifying the obtained picture resource according to a certain scale;
   wherein a maximum scale is set such that a diameter of the displayed circular area does not exceed a screen width of the mobile terminal device. A lower edge of the displayed circle of the magnified layer coincides with a circular center of the circle at the pressed position.
At step S505, determining whether the single finger slides on the touch screen of the mobile terminal;
   wherein if the finger slides and the finger contact position changes, which requires re-obtaining the magnified position, jumping to step S503, and if the finger does not slide continuously, jumping to step S506.
At step S506, determining whether the single finger continues to contact the screen, if the contact continues, continuously magnifying the position pressed by the finger and jumping to S504, and if the finger no longer contacts the screen, stopping magnifying, and restoring the lock screen of the mobile terminal to display in a state before the magnifying.

An embodiment of the disclosure further provides a storage medium. Optionally, in the present embodiment, the storage medium may be configured to store a program code for performing the following steps:
step S1: obtaining a touch duration of a touch operation and/or a pressure value of a touch point corresponding to the touch operation when the terminal is in a lock screen state and receives the touch operation;
step S2: magnifying a content currently displayed when the touch duration and/or the pressure value satisfy a preset condition.

Optionally, in the present embodiment, the storage medium may include, but is not limited to: a U Disk, a read-only memory (ROM), a random access memory (RAM), a mobile hard disk, a disk or optical disk, and other media that can store a program code.

Optionally, specific examples in the present embodiment may refer to the examples described in the foregoing embodiments and alternative implementations, which will not be repeated in the present embodiment.

Obviously, a person skilled in the art would understand that the above modules and steps of the present disclosure can be realized by using a universal computing device, can be integrated in a single computing device or distributed on a network that consists of a plurality of computing devices; and alternatively, they can be realized by using the executable program code of the computing device, so that they can be stored in a storage device and executed by the computing device, in some cases, can perform the shown or described steps in a sequence other than herein, or they are made into various integrated circuit modules respectively, or a plurality of modules or steps thereof are made into a single integrated circuit module, thus to be realized. In this way, the present disclosure is not restricted to any particular hardware and software combination.

The descriptions above are only the example embodiment of the present disclosure, which are not used to restrict the present disclosure.

## Claims

1. A method of magnifying and viewing a lock screen wallpaper of terminal having a touch screen, the method comprising:
obtaining (S202), when the terminal is in a lock screen state, a touch duration and/or a pressure value of the touch operation on the touch screen, wherein in the lock screen state, the touch screen displays a content consisting of a lock screen wallpaper and one or more elements other than the lock screen wallpaper, and wherein the elements other than the lock screen wallpaper cover a portion of the lock screen wallpaper, and comprise at least one of a text, an icon, a widget and a pop-up; and
determining (S402, S502) whether the touch duration and/or the pressure value of the touch operation satisfy a preset condition;
in response to determining that the touch duration and/or the pressure value of the touch operation satisfy the preset condition, the method further comprises:
obtaining (S403, S503) a position of the touch operation on the touch screen and a picture layer of the lock screen wallpaper corresponding to the contact area of the touch operation, wherein the elements other than the lock screen wallpaper are not obtained;
magnifying (S404, S504) the obtained picture of the lock screen wallpaper corresponding to the contact area without magnifying any of the elements other than the lock screen wallpaper.

2. The method according to claim 1, wherein the preset condition is that the touch duration is greater than a first preset threshold, and/or the pressure value is greater than a second preset threshold.

3. The method according to claim 2, wherein magnifying the lock screen wallpaper in the content currently displayed when the touch duration and/or the pressure value satisfy the preset condition comprises:
magnifying a part of the lock screen wallpaper corresponding to a contact area of a touch point of the touch operation in the content currently displayed on the touch screen when the touch duration is greater than the first preset threshold and/or the pressure value is greater than the second preset threshold.

4. The method according to claim 3, wherein magnifying the part of the lock screen wallpaper corresponding to the contact area of the touch point in the content currently displayed comprises:
obtaining (S204-1) a contact area of the touch point in the content currently displayed;
determining (S204-2) from the contact area an area of a largest circle carried by the contact area; and
magnifying (S204-3) a part of the lock screen wallpaper in the area of the largest circle.

5. The method according to claim 3, wherein when the touch operation corresponds to a plurality of touch points,
before magnifying the part of lock screen wallpaper corresponding to the contact area of the touch point in the content currently displayed, the method further comprises: determining (S206) time points at which the touch durations and/or the pressure values of the plurality of touch points satisfy the preset condition; and
magnifying the part of the lock screen wallpaper corresponding to the contact area of the touch point in the content currently displayed comprises: in a case where it is determined according to the time points that there is a single touch point whose touch duration and/or pressure value first satisfy the preset condition among the plurality of touch points, magnifying a part of the lock screen wallpaper corresponding to the contact area of the touch point of the touch operation that first satisfies the preset condition in the content currently displayed on the display screen among the plurality of touch points.

6. The method according to claim 5, wherein the method further comprises:
prohibiting a magnifying operation in a case where there are plural touch points whose touch durations and/or pressure values simultaneously satisfy the preset condition among the plurality of touch points.

7. A terminal, comprising:
a touch screen;
a processor (102); and
a memory (104) configured to store software programs which when executed by the processor cause the processor to perform the method according to any one of claims 1 to 6.

8. A computer-readable storage medium storing instructions which, when executed by a processor of a terminal according to claim 7, cause the processor to perform the method according any of claims 1-6.

## Patentansprüche

1. Verfahren zum Vergrößern und Anzeigen eines Sperrbildschirmhintergrunds eines Terminals mit einem Touchscreen, wobei das Verfahren Folgendes umfasst:
Erhalten (S202), wenn sich das Endgerät in einem Sperrbildschirmzustand befindet, einer Berührungszeit und/oder eines Druckwerts der Berührungsoperation auf dem Touchscreen, wobei in dem Sperrbildschirmzustand, der Touchscreen einen Inhalt anzeigt, der aus einem Sperrbildschirmhintergrund und einem oder mehreren anderen Elementen als dem Sperrbildschirmhintergrund besteht, und wobei die anderen Elemente als der Sperrbildschirmhintergrund einen Teil des Sperrbildschirmhintergrunds abdecken und mindestens eines von einem Text, einem Symbol, einem Widget und einem Popup-Fenster umfassen ; und
Bestimmen (S402, S502), ob die Berührungsdauer und/oder der Druckwert des Berührungsvorgangs eine vordefinierte Bedingung erfüllen;
als Reaktion auf die Bestimmung, dass die Berührungsdauer und/oder der Druckwert des Berührungsvorgangs die vordefinierte Bedingung erfüllen, umfasst das Verfahren ferner:
Erhalten (S403, S503) eines Teils der Berührungsoperation auf dem Touchscreen und einer Bildschicht des Sperrbildschirm-Wallpapers, die dem Berührungsbereich der Berührungsoperation entspricht, wobei andere Elemente als das Sperrbildschirm-Wallpaper nicht erhalten werden;
Vergrößern (S404, S504) des erhaltenen Bildes des Sperrbildschirm-Wallpapers, das dem Berührungsbereich entspricht, ohne dass eines der Elemente außer dem Sperrbildschirm-Wallpaper vergrößert wird.

2. Verfahren nach Anspruch 1, wobei die vordefinierte Bedingung ist, dass die Dauer der Berührung größer als ein erster vordefinierter Schwellenwert ist und/oder dass der Druckwert größer als ein zweiter vordefinierter Schwellenwert ist.

3. Verfahren nach Anspruch 2, wobei das Vergrößern des Sperrbildschirm-Hintergrundbildes in dem aktuell angezeigten Inhalt, wenn die Berührungsdauer und/oder der Druckwert die voreingestellte Bedingung erfüllen, umfasst:
Vergrößern eines Teils des Sperrbildschirmhintergrunds, der einem Kontaktbereich eines Berührungspunkts der Berührungsoperation in dem aktuell auf dem Berührungsbildschirm angezeigten Inhalt entspricht, wenn die Berührungsdauer größer als der erste voreingestellte Schwellenwert ist und/oder der Druckwert größer als der zweite voreingestellte Schwellenwert ist.

4. Verfahren nach Anspruch 3, wobei das Vergrößern des Teils des Sperrbildschirmhintergrunds, der dem Kontaktbereich des Berührungspunkts in dem aktuell angezeigten Inhalt entspricht, umfasst:
Ermitteln (S204-1) eines Kontaktbereichs des Berührungspunkts in dem aktuell angezeigten Inhalt;
Bestimmen (S204-2) eines Bereichs eines größten Kreises, der von dem Kontaktbereich getragen wird, aus dem Kontaktbereich; und
Vergrößern (S204-3) eines Teils des Sperrbildschirmhintergrunds in dem Bereich des größten Kreises.

5. Verfahren nach Anspruch 3, wobei, wenn die Berührungsoperation einer Vielzahl von Berührungspunkten entspricht,
vor dem Vergrößern des Teils des Sperrbildschirm-Hintergrundbildes, der dem Kontaktbereich des Berührungspunktes in dem aktuell angezeigten Inhalt entspricht, das Verfahren ferner umfasst: Bestimmen (S206) von Zeitpunkten, an denen die Berührungsdauern und/oder die Druckwerte der Vielzahl von Berührungspunkten die voreingestellte Bedingung erfüllen, und
Vergrößern des Teils des Sperrbildschirmhintergrunds, der dem Kontaktbereich des Berührungspunkts in dem aktuell angezeigten Inhalt entspricht, umfassend: in einem Fall, in dem gemäß den Zeitpunkten bestimmt wird, dass es einen einzelnen Berührungspunkt gibt, dessen Berührungsdauer und/oder Druckwert zuerst die voreingestellte Bedingung unter der Vielzahl von Berührungspunkten erfüllt, Vergrößern eines Teils des Sperrbildschirmhintergrunds, der dem Kontaktbereich des Berührungspunkts der Berührungsoperation entspricht, der zuerst die voreingestellte Bedingung in dem aktuell auf dem Anzeigebildschirm angezeigten Inhalt unter der Vielzahl von Berührungspunkten erfüllt.

6. Verfahren nach Anspruch 5, wobei das Verfahren ferner umfasst:
Verhindern eines Vergrößerungsvorgangs in einem Fall, in dem es mehrere Berührungspunkte gibt, deren Berührungsdauern und/oder Druckwerte gleichzeitig die voreingestellte Bedingung unter den mehreren Berührungspunkten erfüllen.

7. Ein Endgerät, umfassend:
einen Touchscreen;
einen Prozessor (102); und
einen Speicher (104), der so konfiguriert ist, dass er Softwareprogramme speichert, die, wenn sie von dem Prozessor ausgeführt werden, den Prozessor veranlassen, das Verfahren nach einem der Ansprüche 1 bis 6 durchzuführen.

8. Computerlesbares Speichermedium, das Befehle speichert, die, wenn sie von einem Prozessor eines Terminals nach Anspruch 7 ausgeführt werden, den Prozessor veranlassen, das Verfahren nach einem der Ansprüche 1 bis 6 durchzuführen.

## Revendications

1. Méthode d'agrandissement et de visualisation d'un fond d'écran de verrouillage d'un terminal doté d'un écran tactile, la méthode comprenant :
obtenir (S202), lorsque le terminal est dans un état d'écran de verrouillage, une durée de toucher et/ou une valeur de pression de l'opération de toucher sur l'écran tactile, dans lequel dans l'état d'écran de verrouillage, l'écran tactile affiche un contenu consistant en un fond d'écran de verrouillage et un ou plusieurs éléments autres que le fond d'écran de verrouillage, et dans lequel les éléments autres que le fond d'écran de verrouillage couvrent une partie du fond d'écran de verrouillage, et comprennent au moins un parmi un texte, une icône, un widget et une fenêtre contextuelle ; et
déterminer (S402, S502) si la durée du toucher et/ou la valeur de pression de l'opération tactile satisfont à une condition prédéfinie ;
en réponse à la détermination que la durée du toucher et/ou la valeur de pression de l'opération tactile satisfont à la condition prédéfinie, le procédé comprend en outre :
l'obtention (S403, S503) d'une partie de l'opération tactile sur l'écran tactile et d'une couche d'image du fond de l'écran de verrouillage correspondant à la zone de contact de l'opération tactile, les éléments autres que le fond de l'écran de verrouillage n'étant pas obtenus ;
agrandir (S404, S504) l'image obtenue du fond de l'écran de verrouillage correspondant à la zone de contact sans agrandir aucun des éléments autres que le papier peint de l'écran de verrouillage.

2. Méthode selon la revendication 1, dans laquelle la condition prédéfinie est que la durée du toucher est supérieure à un premier seuil prédéfini, et/ou que la valeur de la pression est supérieure à un second seuil prédéfini.

3. La méthode selon la revendication 2, dans laquelle l'agrandissement du fond de l'écran de verrouillage dans le contenu actuellement affiché lorsque la durée du toucher et/ou la valeur de la pression satisfont à la condition prédéfinie comprend :
agrandir une partie du fond de l'écran de verrouillage correspondant à une zone de contact d'un point tactile de l'opération tactile dans le contenu actuellement affiché sur l'écran tactile lorsque la durée du toucher est supérieure au premier seuil prédéfini et/ou que la valeur de pression est supérieure au second seuil prédéfini.

4. Méthode selon la revendication 3, dans lequel l'agrandissement de la partie du fond de l'écran de verrouillage correspondant à la zone de contact du point tactile dans le contenu actuellement affiché comprend :
obtenir (S204-1) une zone de contact du point tactile dans le contenu actuellement affiché ;
déterminer (S204-2) à partir de la zone de contact une surface d'un cercle plus grand porté par la zone de contact ; et
agrandir (S204-3) une partie du papier peint de l'écran de verrouillage dans la zone du plus grand cercle.

5. Méthode selon la revendication 3, dans lequel lorsque l'opération tactile correspond à une pluralité de points de contact,
avant d'agrandir la partie du fond d'écran de verrouillage correspondant à la zone de contact du point tactile dans le contenu actuellement affiché, le procédé comprend en outre : la détermination (S206) des points temporels auxquels les durées de contact et/ou les valeurs de pression de la pluralité de points tactiles satisfont à la condition prédéfinie ; et
l'agrandissement de la partie du fond de l'écran de verrouillage correspondant à la zone de contact du point tactile dans le contenu actuellement affiché comprend : dans le cas où il est déterminé, en fonction des points temporels, qu'il existe un seul point tactile dont la durée de contact et/ou la valeur de pression satisfont d'abord à la condition prédéfinie parmi la pluralité de points tactiles, l'agrandissement d'une partie du fond de l'écran de verrouillage correspondant à la zone de contact du point tactile de l'opération tactile qui satisfait d'abord à la condition prédéfinie dans le contenu actuellement affiché sur l'écran d'affichage parmi la pluralité de points tactiles.

6. Méthode selon la revendication 5, dans laquelle la méthode comprend en outre :
interdire une opération d'agrandissement dans le cas où il y a plusieurs points de contact dont les durées de contact et/ou les valeurs de pression satisfont simultanément à la condition prédéfinie parmi la pluralité de points de contact.

7. Un terminal comprenant
un écran tactile ;
un processeur (102) ; et
une mémoire (104) configurée pour stocker des programmes logiciels qui, lorsqu'ils sont exécutés par le processeur, permettent à ce dernier d'appliquer la méthode décrite dans l'une des revendications 1 à 6..

8. Support de stockage lisible par ordinateur stockant des instructions qui, lorsqu'elles sont exécutées par un processeur d'un terminal selon la revendication 7, amènent le processeur à exécuter la méthode selon l'une quelconque des revendications 1 à 6.
